# FASCICULE DE BREVET EUROPEEN

(11) **EP 0 416 988 B1**
(45) Date de publication et mention de la délivrance du brevet: **14.12.1994**
(21) Numéro de dépôt: 90402422.1
(22) Date de dépôt: 03.09.1990
(51) Int. Cl.: C21D 10/00, C21D 1/09, B23K 26/02

(54) **Dispositif de traitement de pièces par chocs laser**
Vorrichtung zur Laser-Schock-Behandlung von Werkstücken
Device for laser shock treatment of work pieces

(30) Priorité: 05.09.1989 FR 8911581
(43) Date de publication de la demande: 13.03.1991
(73) Titulaire: CENTRE NATIONAL DE LA RECHERCHE SCIENTIFIQUE (CNRS), 75700 Paris Cedex 07 (FR)
(72) Inventeur: Fabbro, Remy, F-94230 Cachan (FR); Fournier, Jean, F-75016 Paris (FR)
(74) Mandataire: Signore, Robert

(56) Documents cités:
- EP-A- 0 094 912
- EP-A- 0 319 397
- EP-B- 0 077 207
- FR-A- 2 606 518
- GB-A- 2 037 000
- US-A- 4 311 357
- US-A- 4 707 073
- WELDING INTERNATIONAL, vol. 1, no. 10, 1987, pages 935-940, Abington, Cambridge, GB; H. MARUO et al.: "Surface modification by laser and electron beams"

## Description

La présente invention a pour objet un dispositif de traitement de pièces par chocs laser. Elle trouve une application notamment en métallurgie, dans amélioration de la tenue en fatigue des métaux.

On sait qu'il est possible de traiter des matériaux en leur faisant subir un ou des chocs obtenus en dirigeant, sur un échantillon du matériau à traiter, des impulsions très brèves de rayonnement laser. Un tel procédé est décrit par exemple dans US-A-3,850,698, dans EP-A-0 094 912 et dans EP-A-0 085 278.

Dans un tel procédé, on recouvre l'échantillon à traiter d'une couche mince d'un matériau opaque à la longueur d'onde du rayonnement laser employé, et on dispose un matériau transparent (liquide ou solide) devant la couche absorbante.

Le rôle du matériau transparent placé devant le revêtement absorbant est de contrarier la détente du plasma qui se forme à l'interface milieu transparent-revêtement absorbant et de prolonger la durée pendant laquelle s'exerce la pression sur l'échantillon.

Le document FR-A-2 624 138 décrit par ailleurs un procédé permettant d'accroître la profondeur à laquelle les contraintes de compression sont induites. Ce résultat est obtenu par l'utilisation d'une impulsion laser dont le flux lumineux dépasse le seuil au-delà duquel tout matériau transparent devient le siège de phénomènes de claquage qui fait passer le matériau à l'état opaque. Les photons sont alors absorbés à l'intérieur de ce milieu, ce qui provoque une pression empêchant ce mi lieu de se mettre en mouvement sous l'effet de la pression de plasma créée à l'interface milieu transparent-couche absorbante.

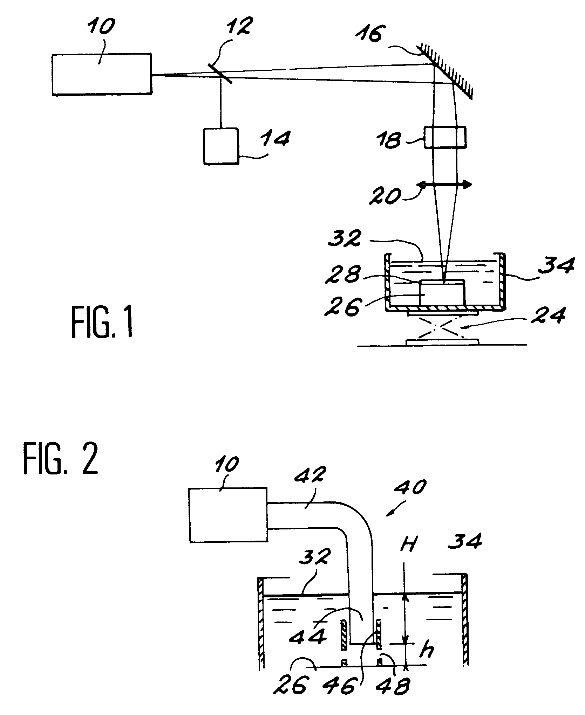

L'installation représentée sur la figure 1 correspond à ces techniques connues. On y voit un laser 10 (par exemple un laser à verre dopé au néodyme fonctionnant en régime déclenché et émettant un rayonnement à 1,06 µm), une lame semi-réfléchissante 12 renvoyant une faible partie (inférieure à 1%) de la lumière incidente vers un photodétecteur 14, un miroir 16, éventuellement un convertisseur de fréquence 18 capable de doubler ou de quadrupler la fréquence, une lentille de focalisation 20. Le poste de travail comprend un plateau 24 de hauteur variable, sur lequel est disposé un échantillon à traiter 26, recouvert d'une couche absorbante 28 et plongeant dans un liquide 32 placé dans une cuve 34.

Bien que donnant satisfaction à certains égards, ces procédés présentent un inconvénient lié à ce que le faisceau lumineux issu du laser doit traverser le liquide transparent -(par exemple l'eau)-avant de venir frapper la surface de la pièce à traiter. Or, cette surface n'est pas nécessairement plane et parallèle à la surface libre du liquide, de sorte que la hauteur d'eau n'est pas constante d'un point à l'autre de la surface. Comme l'eau absorbe en partie le faisceau lumineux, les conditions d'irradiation de la surface de la pièce varient, sauf à modifier la position de la pièce pour rétablir une hauteur d'eau constante, ce qui est très complexe.

La présente invention a pour but de remédier à cet inconvénient. A cette fin, elle propose un dispositif permettant de s'affranchir de cette contrainte de constance de la hauteur d'eau.

Ce but est atteint par l'utilisation d'un guide de lumière dont l'extrémité plonge dans le liquide. La fonction remplie par ce guide est moins la fonction traditionnelle des guides qui est de diriger un faisceau lumineux, que d'éviter à ce faisceau la traversée de la totalité de la couche de liquide. La lumière ne traverse celui-ci que dans la partie non immergée du guide et cette partie peut être maintenue d'épaisseur constante sans difficulté en immergeant plus ou moins l'extrémité du guide. Si la profondeur de la zone à traiter augmente par exemple, le guide sera davantage immergé dans le liquide, sans que la lumière n'ait à traverser une hauteur d'eau plus importante et inversement.

De façon précise, la présente invention a donc pour objet un dispositif de traitement de pièces par chocs laser, comprenant un laser, des moyens optiques pour diriger le faisceau émis par le laser sur la pièce à traiter et des moyens pour recouvrir cette pièce d'un liquide, ce dispositif étant caractérisé par le fait que les moyens optiques sont constitués par un guide de lumière à au moins une fibre optique présentant une extrémité d'entrée couplée au laser et une extrémité de sortie plongeant dans le liquide, cette extrémité de sortie étant tenue face à la pièce à traiter et à une distance réglable de celle-ci par une butée réglable munie de moyens pour établir une circulation de liquide au voisinage de la surface de la pièce traitée.

Les fibres peuvent avoir une composition uniforme, ou présenter un gradient d'indice ou un saut d'indice.

La face de sortie de la ou des fibres peut être recouverte d'une couche antireflet (pour optimiser un fonctionnement dans un liquide transparent).

La présente invention a également pour objet un dispositif de traitement de pièces par chocs laser, comprenant un laser, des moyens optiques pour diriger le faisceau émis par le laser sur la pièce à traiter, caractérisé par le fait qu'il comprend une enceinte étanche remplie de liquide transparent, l'extrémité des moyens optiques pénétrant dans cette enceinte par un passage étanche, l'enceinte comprenant à sa partie inférieure une membrane souple apte à être appliquée sur la pièce à traiter, un conduit d'alimentation en liquide sous pression de l'enceinte, une poignée permettant à un opérateur de déplacer et d'appliquer le dispositif sur une zone à traiter.

De toute façon, les caractéristiques de l'invention apparaîtront mieux à la lumière de la description qui va suivre. Cette description porte sur quelques exemples de réalisationn, donnés à titre explicatif et nullement limitatif, et se réfère à des dessins annexés sur lesquels :
- la figure 1, déjà décrite, illustre une installation conforme à l'art antérieur,
- la figure 2 montre un dispositif à butée selon la présente invention,
- la figure 3 montre une variante avec injection d'eau,
- la figure 4 montre une variante à embout interchangeable,
- la figure 5 illustre deux exemples de guide à surface de sortie courbe,
- la figure 6 illustre une variante destinée au traitement d'arêtes vives,
- la figure 7 (a, b, c, d) montre quelques modes de réalisation du dispositif de l'invention pour le traitement de la paroi intérieure d'un tube,
- la figure 8 montre une variante pour le traitement d'un bord au niveau d'un changement de section intérieure d'un tube,
- la figure 9 illustre un ensemble type "pistolet" permettant de déplacer les moyens de traitement.

On voit, sur la figure 2, un dispositif comprenant des éléments déjà représentés sur la figure 1, à savoir un laser 10, une pièce à traiter 26 baignant dans un liquide transparent 32 contenu dans une cuve 34. Selon l'invention, le dispositif comprend un guide de lumière à au moins une fibre optique 40 ayant une extrémité d'entrée 42 optiquement couplée au laser 10 et une extrémité de sortie 44 plongeant dans le liquide 32. Cette extrémité est tenue par une butée 46 de telle sorte que la face de sortie du guide et la surface de la pièce de sortie soient distantes de h. Ainsi, quelle que soit la hauteur H de la partie immergée (hauteur qui peut varier en fonction de l'évaporation du liquide, ou, comme on le verra plus loin, selon la forme de la surface à bombarder), la distance h demeure la même.

Des orifices 48 d'évacuation de la surpression peuvent être prévus dans la butée 46.

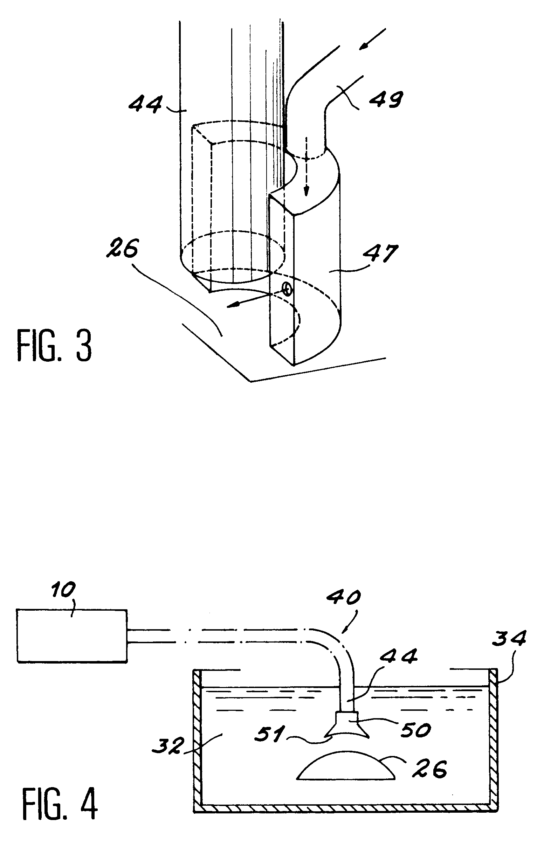

Dans la variante illustrée sur la figure 3, la butée 47 présente une forme semi-cylindrique et sert à la fois de moyen pour tenir en place l'extrémité 44 du guide de lumière et de moyen d'injection d'eau par un conduit 49. Ce montage facilite le nettoyage de la surface traitée.

Sur la figure 4, l'extrémité 44 du guide est munie d'un embout interchangeable 50 dont la face de sortie 51 présente une forme semblable à celle de la surface à traiter. Cet embout est consommable. Il peut être changé à tout moment en fonction de son usure ou lorsque la surface de la pièce à traiter change de forme.

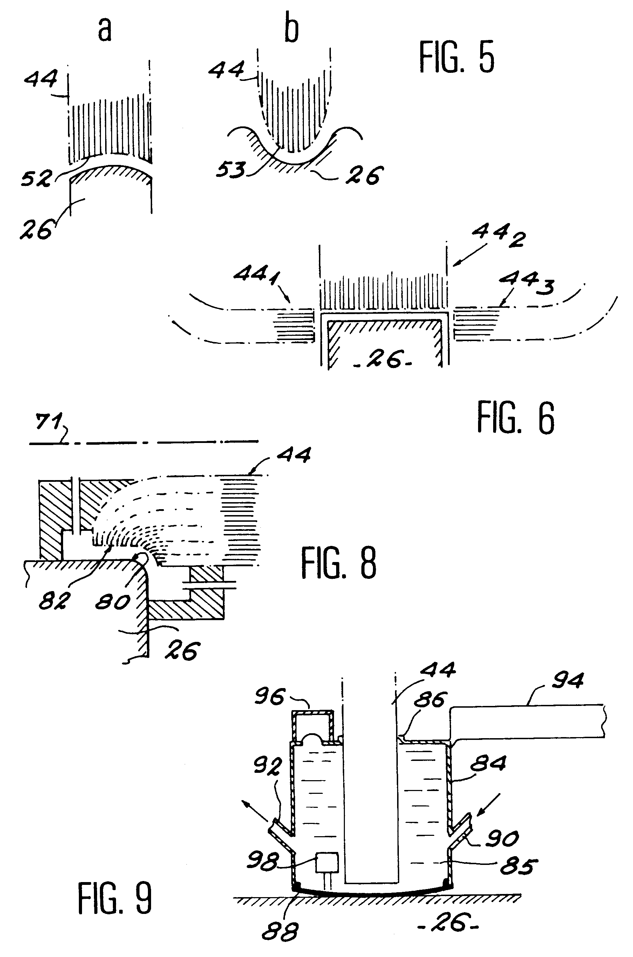

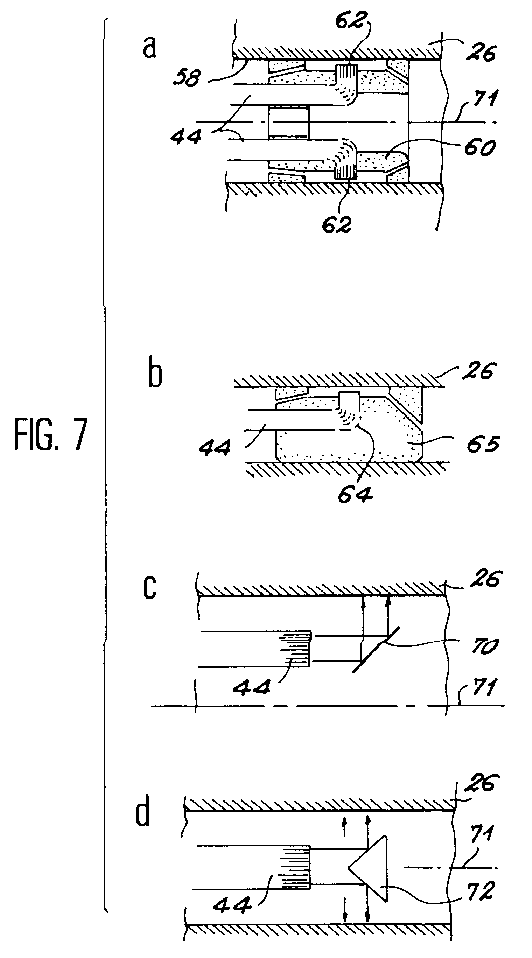

Les figures 5 à 8 illustrent plus particulièrement diverses formes pour l'extrémité 44, dans le cas où le guide de lumière est constitué par un faisceau de fibres optiques.

Sur la figure 5 tout d'abord, on voit (partie a) une surface 52 concave, la pièce à traiter 26 étant convexe et (partie b) une surface 53 convexe, la pièce à traiter 2b étant concave.

Sur la figure 6, l'extrémité est éclatée en trois parties 44/1, 44/2 et 44/3, ce qui permet de traiter les arêtes vives de la pièce 26 (qui est par exemple une dent de pignon).

Les figures 7 et 8 se rapportent à des pièces ayant la forme de tubes creux, la partie à traiter étant la paroi intérieure de ces tubes. Sur la figure 7(a), la paroi à traiter porte la référence 58 et la pièce 60 est une bague cylindrique apte à être déplacée à l'intérieur du tube. Le faisceau de fibres optiques s 'évase en couronne 62 et permet l'irradiation de la paroi 58 le long d'une couronne.

Sur la partie (b), l'extrémité 44 présente un coude 64 et est tenue dans une bague cylindrique 65.

Sur la partie (c), l'extrémité 44 est associée à un miroir 70, orienté à 45° de l'axe 71 du tube. Un tel miroir a la propriété de maintenir constant le trajet de la lumière dans l'eau entre la face de sortie des fibres 44 et la paroi intérieure du tube. Dans ce cas, l'ensemble fibres-miroir peut tourner autour de l'axe 71.

La variante de la figure d correspond à l'utilisation d'un cône réfléchissant 72 placé sur l'axe 71.

La figure 8 montre un mode de réalisation correspondant au traitement d'un bord 80, au niveau d'un changement de section d'un tube. La surface 82 de l'extrémité 44 du guide présente la forme complémentaire.

Enfin, la figure 9 illustre un dispositif comprenant une enceinte étanche 84 remplie de liquide transparent 85, avec un passage étanche 86 permettant l'introduction de l'extrémité 44 du guide de lumière. L'enceinte comprend, à sa partie inférieure, une membrane souple 88 apte à être appliquée sur la pièce à traiter 26. Un conduit 90 est prévu pour l'alimentation en liquide sous pression ainsi qu'un conduit d'évacuation 92. Le dispositif comprend encore une poignée 94 permettant à un opérateur de saisir l'appareil, de le déplacer et de le plaquer contre la pièce à traiter.

A la partie supérieure peut être disposé un amortisseur de choc 96, constitué par exemple par un réservoir d'air étanche couplé à l'enceinte par une membrane souple. Enfin, un microcontact de sécurité 98 peut être disposé à la partie inférieure. Ce contact se ferme lors de la mise en appui de l'ensemble sur la surface à traiter. Cette fermeture déclenche la mise sous pression de l'eau et autorise le tir laser. Mais ce tir n'est effectué que sur commande manuelle.

L'invention qui vient d'être décrite est applicable aussi bien dans le cas du procédé à dépassement seuil décrit dans FR-A-2 624 138 cité plus haut que dans les procédés décrits dans les autres documents cités.

## Revendications

1. Dispositif de traitement de pièces par chocs laser, comprenant un laser (10), des moyens optiques (12, 16, 18, 20) pour diriger le faisceau émis par le laser sur la pièce à traiter et des moyens (34) pour recouvrir cette pièce d'un liquide (32), ce dispositif étant caractérisé par le fait que les moyens optiques sont constitués par un guide de lumière (40) à au moins une fibre optique (42) présentant une extrémité d'entrée (42) couplée au laser (10) et une extrémité de sortie (44) plongeant dans le liquide (32), cette extrémité de sortie étant tenue face à la pièce à traiter et à une distance réglable de celle-ci par une butée réglable (46, 47) munie de moyens (48, 49) pour établir une circulation de liquide au voisinage de la surface de la pièce traitée.

2. Dispositif selon la revendication 1, caractérisé par le fait que les moyens pour établir une circulation de liquide comprennent des orifices (48) d'évacuation de la surpression, percés dans la butée (46).

3. Dispositif selon la revendication 1, caractérisé par le fait que les moyens pour établir une circulation de liquide comprennent un moyen d'injection de liquide par un conduit (49) aboutissant dans la butée (47).

4. Dispositif selon la revendication 1, caractérisé par le fait que l'extrémité de sortie (44) du guide (40) comprend un embout interchangeable (50).

5. Dispositif selon la revendication 1, caractérisé par le fait que l'extrémité de sortie (44) du guide (40) présente une surface (51, 52, 53) dont la forme est adaptée à la forme de la surface de la pièce à traiter (26).

6. Dispositif selon la revendication 5, caractérisé par le fait que la surface de l'extrémité de sortie présente une forme concave (52), la pièce à traiter ayant une surface convexe.

7. Dispositif selon la revendication 5, caractérisé par le fait que la surface de l'extrémité de sortie présente une forme convexe (53), la pièce à traiter ayant une surface concave.

8. Dispositif selon la revendication 1, caractérisé par le fait que la pièce à traiter étant la paroi intérieure (58) d'un tube creux, les moyens pour tenir l'extrémité du guide de lumière au voisinage de la pièce à traiter sont constitués par une bague cylindrique (60, 65) apte à être déplacée à l'intérieur de ce tube.

9. Dispositif selon la revendication 8, caractérisé par le fait qu'il comprend un faisceau de fibres dont l'extrémité s'évase en couronne (62) dans la bague cylindrique (60) pour permettre l'irradiation d'une couronne sur la paroi intérieure (58) à traiter.

10. Dispositif de traitement de pièces par chocs laser, comprenant un laser (10), des moyens optiques (12, 16, 18, 20) pour diriger le faisceau émis par le laser sur la pièce à traiter, caractérisé par le fait qu'il comprend une enceinte étanche (84) remplie de liquide transparent (85), l'extrémité (44) des moyens optiques pénétrant dans cette enceinte par un passage étanche (86), l'enceinte comprenant à sa partie inférieure une membrane souple (88) apte à être appliquée sur la pièce à traiter (26), un conduit (90) d'alimentation en liquide sous pression de l'enceinte, une poignée (94) permettant à un opérateur de déplacer et d'appliquer le dispositif sur une zone à traiter.

11. Dispositif selon la revendication 10, caractérisé par le fait que l'enceinte (84) est munie, à sa partie supérieure, d'un amortisseur de choc (96).

12. Dispositif selon la revendication 10, caractérisé par le fait que la membrane (88) est reliée à un microcontact (98) de sécurité.

## Claims

1. A device for treating pieces by laser shocks, comprising a laser (10), optical means (12, 16, 18, 20) to direct the beam transmitted by the laser onto the piece to be treated, and means (34) for covering this piece with a liquid (32), this device being characterised in that the optical means comprise a light guide (40) with at least one optical fibre (42) having an input end (42) coupled to the laser (10) and an output end (44) immersed in the liquid (32), this output end being held facing the piece to be treated and at a controllable distance therefrom by a controllable stopping device (46, 47) supplied with means (48, 49) for establishing circulation of liquid in the proximity of the surface of the treated piece.

2. A device according to claim 1, characterised in that the means for establishing circulation of liquid comprise openings (48) for evacuating excessive pressure, pierced in the stopping device (46).

3. A device according to claim 1, characterised in that the means for establishing circulation of liquid comprise a means for injecting liquid by way of a duct (49) ending in the stopping device (47).

4. A device according to claim 1, characterised in that the output end (44) of the guide (40) comprises an interchangeable joining piece (50).

5. A device according to claim 1, characterised in that the output end (44) of the guide (40) has a surface (51, 52, 53), the shape of which is adapted to the shape of the surface of the piece to be treated (26).

6. A device according to claim 5, characterised in that the surface of the output end has a concave shape (52), the piece to be treated having a convex surface.

7. A device according to claim 5, characterised in that the surface of the output end has a convex shape (53), the piece to be treated having a concave surface.

8. A device according to claim 1, characterised in that the piece to be treated being the inner wall (58) of a hollow tube, the means for holding the end of the light guide in the proximity of the piece to be treated comprise a cylindrical ring (60, 65) capable of being displaced inside of this tube.

9. A device according to claim 8, characterised in that it comprises a bundle of fibres of which the end is splayed in a collar (62) in the cylindrical ring (60) in order to allow the exposure of a collar on the interior wall (58) to be treated.

10. A device for treating pieces by laser shocks, comprising a laser (10), optical means (12, 16, 18, 20) to guide the beam transmitted by the laser onto the piece to be treated, characterised in that it comprises a sealed enclosed space (84) filled with transparent liquid (85), the end (44) of the optical means entering this enclosed space by way of a sealed passage (86), the enclosed space comprising, on its lower side, a flexible membrane (88) capable of being applied to the piece to be treated (26), a duct (90) for supplying pressurised liquid to the enclosed space, a handle (94) permitting an operator to move and apply the device to a zone to be treated.

11. A device according to claim 10, characterised in that the enclosed space (84) is equipped in its upper part with a shock absorber (96).

12. A device according to claim 10, characterised in that the membrane (88) is connected to a safety microcontact (98).

## Patentansprüche

1. Vorrichtung zur Laser-Schock-Bearbeitung von Werkstücken, umfassend einen Laser (10), optische Einrichtungen (12, 16, 18, 20), um den durch den Laser emittierten Strahl auf das zu bearbeitende Werkstück zu lenken, und Einrichtungen (34), um dieses Werkstück mit einer Flüssigkeit (32) zu überdecken, wobei diese Vorrichtung **dadurch gekennzeichnet** ist, daß die optischen Einrichtungen gebildet werden durch einen Lichtleiter (40) mit wenigstens einer optischen Faser (42), die ein an den Laser (10) gekoppeltes Eintrittsende (42) aufweist und ein Austrittsende (44), das eintaucht in die Flüssigkeit (32), wobei dieses Austrittsende dem zu bearbeitenden Werkstück gegenüber festgehalten wird und mit einem Abstand von diesem, der einstellbar ist durch einen verstellbaren Anschlag (46, 47), versehen mit Einrichtungen (48, 49), um in der Umgebung der Oberfläche des bearbeiteten Werkstücks eine Flüssigkeitszirkulation herzustellen.

2. Vorrichtung nach Anspruch 1, dadurch gekennzeichnet, daß die Einrichtungen zur Herstellung einer Flüssigkeitszirkulation in den Anschlag (46) gebohrte Überdruck-Ablaßöffnungen (48) umfassen.

3. Vorrichtung nach Anspruch 1, dadurch gekennzeichnet, daß die Einrichtungen zur Herstellung einer Flüssigkeitszirkulation eine Einrichtung zur Einspritzung von Flüssigkeit über eine Leitung (49) umfassen, die in dem Anschlag (47) endet.

4. Vorrichtung nach Anspruch 1, dadurch gekennzeichnet, daß das Austrittsende (44) des Leiters (40) einen auswechselbaren Ansatz (50) umfaßt.

5. Vorrichtung nach Anspruch 1, dadurch gekennzeichnet, daß das Austrittsende (44) des Leiters (40) eine Oberfläche (51, 52, 53) aufweist, deren Form angepaßt ist an die Form der Oberfläche des zu bearbeitenden Werkstücks (26).

6. Vorrichtung nach Anspruch 5, dadurch gekennzeichnet, daß die Oberfläche des Austrittsendes eine konkave Form (52) aufweist, wobei das zu bearbeitende Werkstück eine konvexe Form hat.

7. Vorrichtung nach Anspruch 5, dadurch gekennzeichnet, das die Oberfläche des Austrittsendes eine konvexe Form (53) aufweist, wobei das zu bearbeitende Werkstück eine konkave Form hat.

8. Vorrichtung nach Anspruch 1, dadurch gekennzeichnet, daß das zu bearbeitende Teil die Innenwand (58) eines hohlen Rohrs ist, wobei die Einrichtungen, um das Ende des Lichtleiters in der Nähe des zu bearbeitenden Teils zu halten, gebildet werden durch einen zylindrischen Ring (60, 65), der geeignet ist, im Inneren dieses Rohres verschoben zu werden.

9. Vorrichtung nach Anspruch 8, dadurch gekennzeichnet, daß sie ein Fasernbündel umfaßt, dessen Ende sich in dem zylindrischen Ring (60) kranzförmig erweitert (62), um die Irradiation eines Kranzes auf der zu bearbeitenden Innenwand (58) zu ermöglichen.

10. Vorrichtung zur Laser-Schock-Bearbeitung von Werkstücken, umfassend einen Laser (10), optische Einrichtungen (12, 16, 18, 20), um den durch den Laser emittierten Strahl auf das zu bearbeitende Werkstück zu lenken, dadurch gekennzeichnet, daß sie einen dichten Behälter (84) umfaßt, gefüllt mit transparenter Flüssigkeit (85), wobei das Ende (44) der optischen Einrichtungen durch einen dichten Durchlaß (86) eindringt in diesen Behälter und der Behälter an seiner Unterseite eine biegsame Membran (88) umfaßt, geeignet, um auf dem zu bearbeitenden Werkstück (26) angesetzt zu werden, eine Druckflüssigkeit-Versorgungsleitung (90) des Behälters und einen Griff (94), der einer Bedienungsperson ermöglicht, die Vorrichtung zu bewegen und an einer zu bearbeitenden Zone anzusetzen.

11. Vorrichtung nach Anspruch 10, dadurch gekennzeichnet, daß der Behälter (84) an seiner Oberseite mit einem Stoßdämpfer (96) versehen ist.

12. Vorrichtung nach Anspruch 10, dadurch gekennzeichnet, daß die Membran (88) verbunden ist mit einem Sicherheits-Mikrokontakt (98).
